# EUROPÄISCHE PATENTANMELDUNG

(11) **EP 0 945 876 A1**
(43) Veröffentlichungstag der Anmeldung: **29.09.1999**
(21) Anmeldenummer: 99400580.9
(22) Anmeldetag: 08.03.1999
(51) Int. Cl.: H01B 11/22, G02B 6/44

(54) **Hybridkabel mit Lichtwellenleiter und elektrischem Leiter**

(30) Priorität: 26.03.1998 DE 19813444
(71) Anmelder: ALCATEL, 75008 Paris (FR)
(72) Erfinder: Weiss, Alexander Dr., 41066 Mönchengladbach (DE)
(74) Vertreter: Döring, Roger, Dipl.-Ing.

(57) **Zusammenfassung**

Vorgeschlagen wird ein Hybridkabel, insbesondere zur Verlegung in Leitungen für fluide Medien, mit mindestens einem Lichtwellenleiter (2), der in einer Schutzhülle angeordnet ist, einem oder mehreren elektrischen Leitern (4, 5) und einem Mantel (3), der die elektrischen Leiter (4, 5) und die Schutzhülle umschließt. Es zeichnet sich dadurch aus, daß die Schutzhülle ein Metallrohr (1, 7, 8) ist und die Oberfläche des Metallrohres (1, 7, 8) eine Wellung aufweist, die im wesentlichen senkrecht zu seiner Längsachse ausgerichtet ist (Fig. 1).

## Beschreibung

Die Erfindung bezieht sich auf ein Hybridkabel, insbesondere zur Verlegung in Leitungen für fluide Medien, mit mindestens einem Lichtwellenleiter, der in einer Schutzhülle angeordnet ist, einem oder mehreren elektrischen Leitern und einem Mantel, der die elektrischen Leiter und die Schutzhülle umschließt.

Optische Kabel umfassen neben einem oder mehreren Lichtwellenleitern häufig elektrische Leiter, die beispielsweise zur Spannungsversorgung oder elektrischen Signalübertragung von elektronischen bzw. optoelektronischen Komponenten dienen, welche am Kabel angeordnet oder damit verbunden sind. Ein derartiges Hybridkabel ist unter anderem aus der Druckschrift DE 35 22 694 A1 bekannt. Zum Schutz vor mechanischen Belastungen sind die Lichtwellenleiter in Hüllen aus Kunststoff angeordnet, bilden also Hohl- oder Bündeladern, die um einen zugfesten Kern verseilt sind. Die Schutzhüllen verhindern eine Schädigung der Lichtwellenleiter bei radialer Kraftbelastung des Kabels, während der Kern insbesondere axiale Belastungen aufnimmt. Außenseitig ist das Hybridkabel von einem Mantel aus polymerem Material umschlossen.

Um aufwendige Erdarbeiten zu reduzieren werden optische Kabel und Hybridkabel in zunehmendem Maße in Leitungssystemen für fluide Medien verlegt, beispielsweise in Abwasser-, Frischwasser- oder Gasleitungen. Damit sich der Strömungswiderstand für das fluide Medium in der Leitung nicht übermäßig erhöht, ist es erforderlich, daß der Querschnitt des Kabels gering ist. Weiterhin muß das Kabel eine hohe Flexibilität und eine gute Querstabilität aufweisen, so daß die Verlegung in der Leitung leicht möglich ist und die Lichtwellenleiter dabei vor Beschädigungen geschützt sind. Speziell bei der Verlegung in Wasserleitungen ist zudem ein guter Schutz der Lichtwellenleiter vor Wasserdampf erforderlich. Schließlich ist auch ein Nagetierschutz des Kabels von Vorteil, insbesondere bei abschnittsweisem Verlauf außerhalb der Leitung und bei der Verlegung in Abwasserleitungen.

Vor diesem Hintergrund hat sich die Erfindung die Entwicklung eines Hybridkabels zur Aufgabe gestellt, das bei geringem Querschnitt und guter Flexibilität eine hohe Querstabilität aufweist und die Lichtwellenleiter vorzugsweise wasserdampfdicht umschließt.

Diese Aufgabe wird erfindungsgemäß dadurch gelöst, daß die Schutzhülle ein Metallrohr ist und die Oberfläche des Metallrohres eine Wellung aufweist, die im wesentlichen senkrecht zu seiner Längsachse ausgerichtet ist.

Die Verwendung eines Metallrohres als Hülle der Lichtwellenleiter des erfindungsgemäßen Hybridkabels gewährleistet aufgrund der hohen Festigkeit des Materials ihren sicheren Schutz, speziell vor radialen Kraftwirkungen. Um dennoch eine gute Flexibilität des Kabels zu gewährleisten, weist die Oberfläche des Metallrohres eine Wellung auf. Dabei ist die Wellung, d. h. der Verlauf der Kammlinien der Wellenberge und -täler, im wesentlichen senkrecht zur Längsachse des Metallrohres ausgerichtet. Alternativ zu einer exakt senkrecht ausgerichteten Wellung mit jeweils den Rohrumfang geschlossen umlaufenden Wellenbergen und - tälern ist eine schraubenförmig umlaufende Wellung möglich. Tiefe und Abstand der Wellenberge und -täler sind in Abhängigkeit von den Materialeigenschaften und der Wanddicke des Metallrohres derart einzustellen, daß eine hinreichende Flexibilität des Kabels gegeben ist. Denkbar ist, daß lediglich die Außenseite des Metallrohres eine Riffelung aufweist, während seine Innenseite glatt ist. Aus fertigungstechnischen Gründen sind jedoch vorzugsweise sowohl die Innenseite als auch die Außenseite des Rohres gewellt. Zweckmäßig ist das Metallrohr im Zentrum des Kabels angeordnet, um dessen Biegsamkeit in möglichst geringem Maße zu beeinträchtigen. Bevorzugt weist das Metallrohr eine hydrophobe Füllmasse auf oder ist mit quellbarem Material versehen um die Längswasserdichtigkeit des Kabels zu gewährleisten.

Infolge der hohen Festigkeit des Metallrohres ist das erfindungsgemäße Kabel dünn und querstabil, während seine Flexibilität durch die Wellung des Rohres gewährleistet ist. Vorzugsweise ist das Metallrohr nahtlos oder durch Längsverschweißung umlaufend hermetisch geschlossen, so daß es die Lichtwellenleiter auch vor Wasserdampf sicher schützt. Daher ist das erfindungsgemäße Hybridkabel insbesondere zur Verlegung in Leitungen für fluide Medien geeignet. Möglich ist jedoch auch eine Verlegung im Erdreich, die in vielen Fällen zweckmäßig ist, wenn das Kabel zur Verbindung mit einem Endgerät aus der Leitung herausgeführt wird. Schließlich bietet das Metallrohr einen guten Nagetierschutz.

Mit dem Ziel, einen möglichst geringen Querschnitt des Hybridkabels zu erreichen, bildet das Metallrohr in einer bevorzugten Ausgestaltung der Erfindung einen der elektrischen Leiter. Auf diese Weise verringert sich die Anzahl der zum Aufbau des Kabels notwendigen Komponenten.

Bei Nutzung des Rohres als Leiter ist seine Fertigung aus einem Metall hoher elektrischer Leitfähigkeit von Vorteil, etwa Kupfer oder Aluminium. Vielfach läßt sich eine hinreichende Leitfähigkeit des Metallrohres auch erzielen, indem lediglich seine Oberfläche mit einem Metall hoher Leitfähigkeit beschichtet ist. Der übrige Teil des Querschnitts der Rohrwandung besteht in diesem Fall zweckmäßig aus einem Metall hoher Festigkeit. Geeignet ist beispielsweise ein Stahlrohr als Träger, das zur Verbesserung der Leitfähigkeit mit Aluminium beschichtet ist.

Zur Steigerung der Übertragungskapazität des Kabels sind bevorzugt mehrere Lichtwellenleiter im Metallrohr angeordnet.

Neben frei im Metallrohr verlaufenden Lichtwellenleitern ist es möglich, daß letztere in eine eine Hülle aus polymerem Material, also eine Hohl- bzw. Bündelader, oder ein Trägerelement eingebracht sind. Ein Trägerelement weist in der Regel schlitz- oder rillenförmige Aussparungen seiner Oberfläche zur Aufnahme der Lichtwellenleiter auf (,,slotted core cable"). Umschließt das Metallrohr mehrere Adern bzw. Trägerelemente, sind diese zweckmäßig umeinander oder um ein Zentralelement verseilt. Bei dem Zentralelement kann es sich sowohl um ein zugfestes Element als auch einen elektrischen Leiter handeln.

Entsprechend der Zahl der notwendigen Stromkreise ist es in aller Regel erforderlich, daß das Hybridkabel mehrere elektrische Leiter enthält. Geeignete elektrische Leiter sind zum Beispiel Drähte oder Litzen, die parallel zum Metallrohr verlaufen. Denkbar ist auch, daß Drähte oder Litzen mit Adern oder Trägerelementen der Lichtwellenleiter verseilt sind oder in der Rille eines Trägerelementes (slotted core) angeordnet sind. Auch ein Metallgeflecht ist ein geeigneter elektrischer Leiter und kann beispielsweise koaxial zum Metallrohr verlaufen. Metallgeflechte sind speziell zur Erreichung einer hohen Flexibilität des Kabels von Vorteil..

Ebenso besteht die Möglichkeit, daß ein elektrischer Leiter ein weiteres Metallrohr ist, das gleichfalls Lichtwellenleiter umschließen kann. Im Fall mehrerer Metallrohre ist es zweckmäßig, sie in einer Ebene im Zentrum des Kabels anzuordnen, so daß eine gute Biegsamkeit senkrecht zu dieser Ebene gewährleistet ist. Auf diese Weise entsteht ein Kabel mit einem flachen oder ovalen Querschnitt, wobei die durch die Metallrohre definierte Ebene vorzugsweise mit der großen Halbachse des Ovals zusammenfällt.

Schließlich können einer oder mehrere elektrische Leiter im Metallrohr angeordnet sein. Dabei ist sowohl ein koaxialer Verlauf im Metallrohr möglich als auch eine Verseilung mit anderen Elementen im Rohrinneren oder ein auf andere Weise exzentrischer Verlauf. Als lsolierung zwischen dem Metallrohr und einem in ihm befindlichen elektrischen Leiter ist eine Schicht aus einem Polymer, etwa Polyethylen geeignet, deren Dicke vorzugsweise gering ist. Alternativ oder ergänzend kann die Isolierung durch die Adern oder Trägerelemente der Lichtwellenleiter sichergestellt werden, die um einen zentralen Leiter im Metallrohr verseilt sind. Im Fall koxialer Metallrohre ist denkbar, daß lediglich das äußere Metallrohr eine Wellung aufweist, während das innere Rohr eine glatte Oberfläche besitzt.

Verlaufen im Mantel mehrere elektrische Leiter parallel nebeneinander, so sind sie zweckmäßig vom Mantel umschlossen und durch ihn beabstandet. Die Herstellung erfolgt beispielsweise, indem der Mantel auf die Oberfläche der parallel zueinander einlaufender Leiter extrudiert wird. Neben einem konvexen, beispielsweise ovalen Kabelquerschnitten zur optimalen Anpassung an den inneren Querschnitt einer Fluidleitung ist es möglich, daß die Leiter lediglich durch einen Steg miteinander verbunden sind. Auf diese Weise lassen sie sich leicht trennen, um die Kabelverzweigung zu vereinfachen.

Der Mantel des Kabels besteht bevorzugt aus einem polymeren Material wie Polyurethan oder Polyethylen. Zur Verbesserung der mechanischen Eigenschaften ist das Polyethylen zweckmäßig vernetzt. Das Material des Mantels ist in Anpassung an das fluide Medium der Leitung zu wählen. Dabei darf der Mantel weder durch das Medium geschädigt werden noch, speziell im Fall von Trinkwasserleitungen, die Qualität des Mediums beeinträchtigen.

Im folgenden sind Ausführungsbeispiele der Erfindung an Hand der prinzipienhaften Zeichnung näher erläutert. Sie zeigt Querschnitte senkrecht zur Längsachse von unterschiedlichen erfindungsgemäßen Hybridkabeln.
Figur 1: Kabel mit einem Metallrohr und Leitungsdrähten,
Figur 2: Kabel mit zwei parallelen Metallrohren,
Figur 3: Kabel mit zwei konzentrischen Metallrohren,
Figur 4: Kabel mit einem elektrischen Kerndraht und einem konzentrischen Metallrohr.

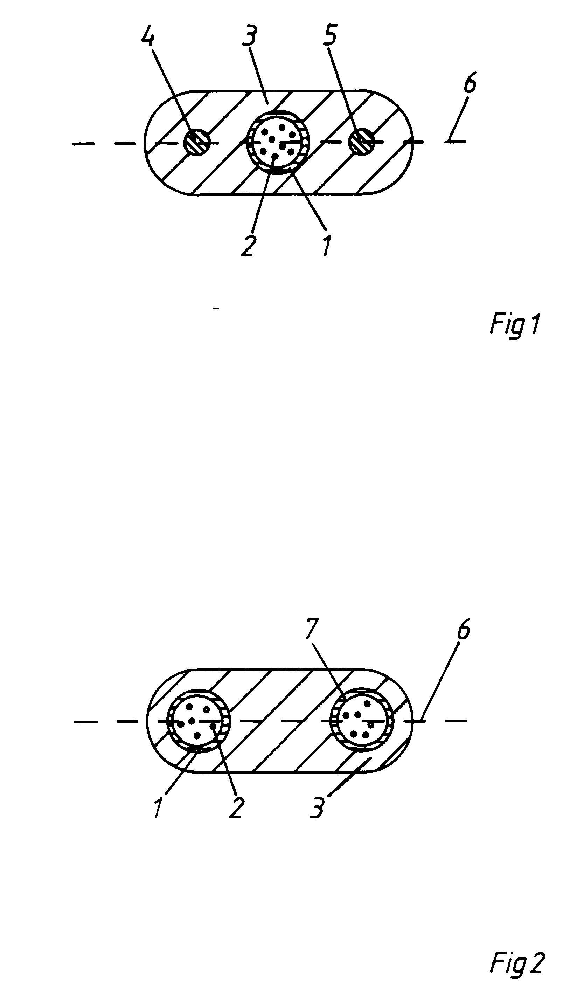

Bei dem Ausführungsbeispiel in Figur 1 ist im Zentrum des Kabels ein Metallrohr 1 angeordnet, welches einen stabilen mechanischen Schutz für mehrere darin befindliche Lichtwellenleiter 2 bildet. Das Metallrohr 1 weist eine Wellung auf, deren Berge und Täler näherungsweise parallel zur Bildebene verlaufen. Neben dem Metallrohr 1, das beispielsweise aus Kupfer besteht, umschließt der Mantel 3 des Kabels zwei elektrische Leiter 4, 5, etwa Kupferdrähte. Auch das Metallrohr 1 bildet einen elektrischen Leiter. Zweckmäßig sind das Metallrohr 1 und die Leiter 4, 5 in einer Ebene 6 angeordnet, die im Beispiel horizontal verläuft, so daß die Biegung des Kabels in vertikaler Richtung möglichst wenig behindert wird. Als Material des Mantels 3 ist vernetztes Polyethylen geeignet.

Figur 2 zeigt ein Ausführungsbeispiel des Kabels, bei dem zwei gewellte Metallrohre 1, 7 die elektrischen Leiter bilden. Auch in diesem Fall umschließen die Metallrohre 1, 7 Lichtwellenleiter 2 und sind in einem gemeinsamen Mantel 3 eingebettet, der ihre Isolierung bildet. Der flache Kabelquerschnitt ermöglicht die einfache Biegung senkrecht zur Ebene 6 der Metallrohre 1, 7, die einen stabilen mechanischen Schutz für die Lichtwellenleiter 2 bilden.

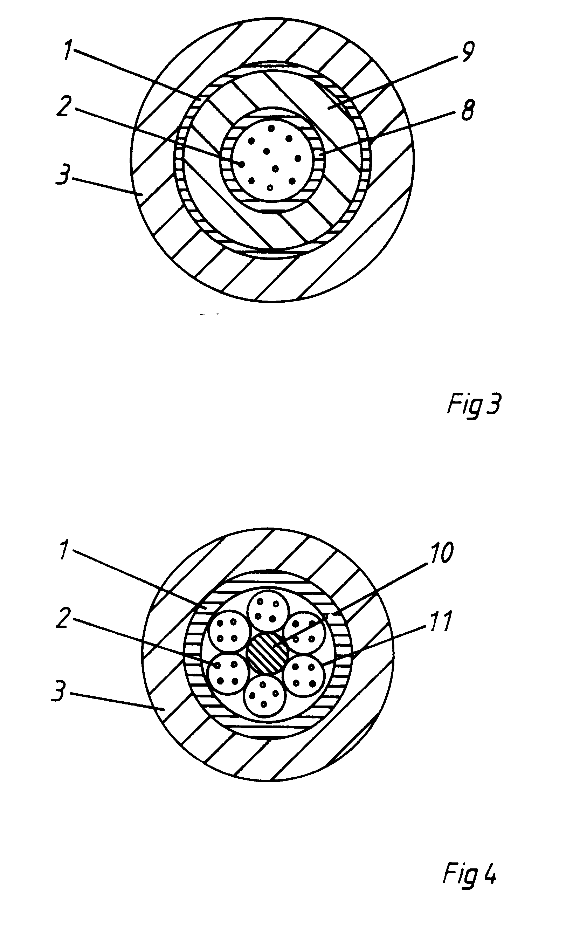

Figur 3 gibt ein Hybridkabel wieder, dessen elektrische Leiter 2 koaxial zueinander verlaufende Metallrohre 1, 8 sind, von denen zumindest das äußere Metallrohr 1 gewellt ist. Zwischen beiden Metallrohren 1, 8 befindet sich eine Isolierung 9, etwa eine Polyethylenschicht. Auch der Mantel 3 des Kabels besteht vorzugsweise aus Polyethylen. Im inneren Metallrohr 8 verlaufen mehrere Lichtwellenleiter 2.

Figur 4 zeigt eine Ausführung eines erfindungsgemäßen Hybridkabels, bei dem die elektrischen Leiter ein gewelltes Metallrohr 1 und ein koaxiales Zentralelement 10 sind. Das Zentralelement 10 ist beispielsweise ein Kupferdraht oder ein Metallrohr, dessen Oberfläche gewellt oder glatt ist. Um das Zentralelement sind mehrere Adern 11 verseilt, in denen die Lichtwellenleiter 2 verlaufen. Die Hüllen der Adern 11 bestehen vorzugsweise aus polymerem Material. Die Adern 11 bilden eine elektrische Isolierung zwischen dem Metallrohr 1 und dem Zentralelement 10, so daß eine weitere lsolierungsschicht zwischen Metallrohr 1 und Zentralelement 10 eine geringe Dicke besitzen oder ggf. entfallen kann. Möglich ist es, eine oder mehrere Adern 11 durch isolierte elektrische Leiter zu ersetzen. Außenseitig ist das Kabel durch einen Mantel 3 umschlossen, der analog zu den vorbeschriebenen Beispielen ausgeführt werden kann. In allen Ausführungsbeispielen sind Hohlräume im Kabelquerschnitt vorzugsweise mit einer hydrophoben Füllmasse auf oder quellbarem Material versehen, um die Längswasserdichtigkeit des Kabels zu gewährleisten.

Im Ergebnis entsteht auf diese Weise ein insbesondere zur Verlegung in Leitungen für fluide Medien geeignetes Hybridkabel, das sich durch einen geringen Querschnitt, eine gute radiale Belastbarkeit und eine hohe Flexibilität auszeichnet.

## Patentansprüche

1. Hybridkabel, insbesondere zur Verlegung in Leitungen für fluide Medien, mit mindestens einem Lichtwellenleiter (2), der in einer Schutzhülle angeordnet ist, einem oder mehreren elektrischen Leitern (4, 5) und einem Mantel (3), der die elektrischen Leiter (4, 5) und die Schutzhülle umschließt, **dadurch gekennzeichnet,** daß
die Schutzhülle ein Metallrohr (1, 7, 8) ist und die Oberfläche des Metallrohres (1, 7, 8) eine Wellung aufweist, die im wesentlichen senkrecht zu seiner Längsachse ausgerichtet ist.

2. Kabel nach Anspruch 1, **dadurch gekennzeichnet**, daß das Metallrohr (1, 7, 8) einer der elektrischen Leiter ist.

3. Kabel nach Anspruch 1 oder 2, **dadurch gekennzeichnet,** daß das Metallrohr (1, 7, 8) oder seine Oberfläche aus einem Metall hoher Leitfähigkeit besteht.

4. Kabel nach einem der vorhergehenden Ansprüche, **dadurch gekennzeichnet,** daß ein Metallrohr (1, 7, 8) mehrere Lichtwellenleiter (2) umschließt.

5. Kabel nach einem der vorhergehenden Ansprüche, **dadurch gekennzeichnet,** daß die Lichtwellenleiter (2) in einer Ader (11) oder einem Trägerelement angeordnet sind.

6. Kabel nach Anspruch 5, **dadurch gekennzeichnet,** daß mehrere Adern (11) oder Trägerelemente verseilt sind.

7. Kabel nach einem der vorhergehenden Ansprüche, **dadurch gekennzeichnet,** daß ein elektrischer Leiter (4, 5) ein Draht, eine Litze oder ein Metallgeflecht ist.

8. Kabel nach einem der vorhergehenden Ansprüche, **dadurch gekennzeichnet,** daß mindestens zwei Metallrohre (1, 7, 8) vorhanden sind, die elektrische Leiter bilden.

9. Kabel nach einem der vorhergehenden Ansprüche, **dadurch gekennzeichnet,** daß ein elektrischer Leiter (4, 5) im ersten Metallrohr (1) angeordnet ist.

10. Kabel nach einem der vorhergehenden Ansprüche, **dadurch gekennzeichnet,** daß der Mantel (3) elektrische Leiter (4, 5) und/oder Metallrohre (1, 7, 8) umschließt und voneinander beabstandet.

11. Kabel nach einem der vorhergehenden Ansprüche, **dadurch gekennzeichnet,** daß der Mantel (3) aus Polyethylen oder Polyurethan besteht.
